# EUROPEAN PATENT SPECIFICATION

(11) **EP 2 206 086 B1**
(45) Date of publication and mention of the grant of the patent: **04.05.2011**
(21) Application number: 08839308.7
(22) Date of filing: 20.10.2008
(51) Int. Cl.: G06T 7/00, G06T 17/20

(54) **AUTOMATIC GEOMETRICAL AND MECHANICAL ANALYZING METHOD AND SYSTEM FOR TUBULAR STRUCTURES**
AUTOMATISCHES GEOMETRISCHES UND MECHANISCHES ANALYSEVERFAHREN UND SYSTEM FÜR RÖHRENFÖRMIGE STRUKTUREN
PROCÉDÉ D'ANALYSE MÉCANIQUE ET GÉOMÉTRIQUE AUTOMATIQUE, ET SYSTÈME DE STRUCTURES TUBULAIRES

(30) Priority: 19.10.2007 WO PCT/EP2007/061184
(43) Date of publication of application: 14.07.2010
(73) Proprietor: Vascops, 8010 Graz (AT)
(72) Inventor: GASSER, Christian, T., S-183 57 Täby (SE); AUER, Martin, A-1020 Wien (AT)
(74) Representative: KIPA
(86) International application number: PCT/EP2008/064157
(87) International publication number: WO 2009/050304

(56) References cited:
- WOLTERS ET AL: "A patient-specific computational model of fluid-structure interaction in abdominal aortic aneurysms" MEDICAL ENGINEERING & PHYSICS, BUTTERWORTH-HEINEMANN, GB, vol. 27, no. 10, 1 December 2005 (2005-12-01), pages 871-883, XP005159852 ISSN: 1350-4533
- DIMITRIOS E KIOUSIS ET AL: "A Numerical Model to Study the Interaction of Vascular Stents with Human Atherosclerotic Lesions" ANNALS OF BIOMEDICAL ENGINEERING, KLUWER ACADEMIC PUBLISHERS-PLENUM PUBLISHERS, NE, vol. 35, no. 11, 24 July 2007 (2007-07-24), pages 1857-1869, XP019547577 ISSN: 1573-9686 cited in the application
- DI MARTINO E S ET AL: "Fluid-structure interaction within realistic three-dimensional models of the aneurysmatic aorta as a guidance to assess the risk of rupture of the aneurysm" MEDICAL ENGINEERING & PHYSICS ELSEVIER UK, vol. 23, no. 9, November 2001 (2001-11), pages 647-655, XP002516363 ISSN: 1350-4533
- AUER M ET AL: "3-D reconstruction of tissue components for atherosclerotic human arteries using ex vivo high-resolution MRI" IEEE TRANSACTIONS ON MEDICAL IMAGING IEEE USA, vol. 25, no. 3, March 2006 (2006-03), pages 345-357, XP002516364 ISSN: 0278-0062
- DE PUTTER S ET AL: "Computational Mesh Generation for Vascular Structures with Deformable Surfaces" INTERNATIONAL JOURNAL OF COMPUTER ASSISTED RADIOLOGY AND SURGERY; A JOURNAL FOR INTERDISCIPLINARY RESEARCH, DEVELOPMENT AND APPLICATIONS OF IMAGE GUIDED DIAGNOSIS AND THERAPY, SPRINGER, BERLIN, DE, vol. 1, no. 1, 1 March 2006 (2006-03-01), pages 39-49, XP019360748 ISSN: 1861-6429
- COHEN L D ET AL: "Deformable models for 3-D medical images using finite elements and balloons" PROCEEDINGS OF THE COMPUTER SOCIETY CONFERENCE ON COMPUTER VISION AND PATTERN RECOGNITION. CHAMPAIGN, IL, JUNE 15 - 18, 1992; [PROCEEDINGS OF THE COMPUTER SOCIETY CONFERENCE ON COMPUTER VISION AND PATTERN RECOGNITION], NEW YORK, IEEE, US, vol. -, 15 June 1992 (1992-06-15), pages 592-598, XP010029362 ISBN: 978-0-8186-2855-9

## Description

This invention relates to the field of diagnostic systems, and more specifically to computer-based diagnostic systems for hollow structures, such as elongated hollow structures, such as tubular structures, such as for instance vascular structures comprising vascular tissue. The diagnostic systems provide analysis and information data for instance related to the geometry and mechanics of the elongated hollow structures.

### Background of the Invention

Many procedures, e.g. interventions and diagnostics concerning vascular tissue must be carried out at an internal anatomical site. The physician's information for these medical procedures is enriched by image data acquired by image modalities, for instance a scanning device, e.g. based on Computer Tomography (CT) or Magnetic Resonance (MR). In general this provides a plurality of two-dimensional (2D) images, also called slices, of the patient's anatomical structure. Some scanning devices include computer hard and software for building three-dimensional (3D) datasets of the plurality of 2D images.

In addition, computer systems implementing models for visualizing particular separated regions of the patient's body, like organs of the patient, as well as virtually measuring dimensions of the patient's anatomical structure are known. These known models are mainly based on threshold approaches, and hence, require a reasonable high image quality, in order to function properly. For instance, a high image resolution and a high contrast between objects to be separated are needed. For CT scanning systems, this can in many cases only be realized by using contrast agents (contrast media) and/or high x-ray radiation doses, which both are a burden for the patient that is desired to be reduced or avoided.

A specific model is described in Olabarriaga SD, Rouet J-M, Fradkin M, Breeuwer M and Niessen WJ, (2005) Segmentation of Thrombus in Abdominal Aortic Aneurysms From CTA With Nonparametric Statistical Grey Level Appearance Modeling. IEEE Trans Med Imag 24. 477-485. The model disclosed in this paper is based on a segmentation of an Intra-luminal Thrombus (ILT) in Abdominal Aortic Aneurysms (AAAs), which uses the concept of deformable models. However, this model's initialization requires the presence of an ILT and it needs furthermore the presence of a high threshold between the lumen and the ILT, and it does not allow for the analysis of vascular bifurcations, as it is frequently required. Hence, this model has very limited practical applicability.

For some medical procedures, like when estimating the rupture risk of AAAs, or when identifying the vulnerability of arterial stenoses, mechanical loading conditions of the vascular tissue usefully enriches the physician's information for planning treatments. This type of information, related to mechanical loading conditions, cannot be provided by imaging systems, but a post-processed structural analysis, based on data provided by them, can facilitate so. However, presently there is no automatic and comprehensive system available, which integrates all structural relevant anatomical objects and provides information regarding the mechanical loading conditions of e.g. vascular tissue. For example, for AAAs, the arterial wall and the ILT, which is present in nearly all clinically relevant AAAs, are relevant structural components.

In US patent application US2006/0100502-A1 of Chen DT, et. al. an anatomical visualization and measurement system and method are disclosed. According to this disclosure, a risk of rupture of a blood vessel is determined using an appropriate set of 2-D slice images obtained by scanning a blood vessel. The method comprises generating a mesh model of the blood vessel using the set of 2-D slice images; conducting finite element stress analysis on the mesh model to calculate the level of stress on different locations on the mesh model; and determining the risk of rupture of the blood vessel based on the calculated levels of stress on different locations on the mesh model. However, the method and system disclosed in US2006/0100502-A1 are limited to provide a single surface mesh of a vascular lesion, and hence, only shell-like structural effects of the vessel wall can be considered, e.g., using Shell Finite Elements. Details regarding such Finite Element (FE) formulations are for instance disclosed in Zienkiewicz OC and Taylor RL, (2005) The Finite Element Method for Solid and Structural Mechanics, Butterworth Heinemann, 6th edition. Consequently, in case of AAAs, the structural impact of the ILT is neglected, which causes unrealistic and unreliable mechanical predictions of the AAAs. This is emphasized by several studies in the literature, e.g., Wang et al., (2002) Effect of intraluminal thrombus on wall stress in patient-specific models of abdominal aortic aneurysm. J Vasc Surg. 36, p. 598-604. Hence, an unreliable diagnosis and prediction of risk of rupture may be made, which is unsatisfactory, at least from a point of patient safety. In addition, the method and system disclosed in US2006/0100502-A1 require manual interaction, e.g., to remove unwanted segmentation elements. Moreover, the method and system disclosed in US2006/0100502-A1, uses a plurality of different software products (one to separate 2D images, one to mesh the surface (representing the vessel wall) and one to perform a Finite Element (FE) analysis) which are involved to predict the mechanical loading state. This is both inconvenient for a user and technically challenging as an interface between the different software products has to be guaranteed in a reliable and safe manner, which in practice is difficult to ensure.

Another method has been introduced in Raghavan et al., 2005, Automated methodology for determination of stress distribution in human abdominal aortic aneurysm, J Biomech Eng. 127, p. 868-71. In this disclosure geometrical data from a 3D visualization system is post-processed. Again, it is limited to model the AAA's outer surface by means of shell-like structural effects, and the thickwalled structure (or volume effect) of the vascular wall is neglected.

In order to avoid 'mesh-based' stress artifacts of the FE analysis, a reasonable high quality of the computational grid (mesh) is required, and different types of mesh-smoothing strategies are applied. However, the methods and systems disclosed in US2006/0100502-A1 or Raghavan et al., 2005, apply mesh-smoothing strategies, which change the geometry of the objects, such that the vascular body's (outer) geometry cannot be captured accurately, i.e. a mismatch between the model geometry and the underlying image data exits. Hence, there is a need for at least an improved method and/or system, which facilitate an accurate geometrical and mechanical modeling of hollow structures, such as elongate hollow structures, as for instance tubular structures, such as vascular bodies, in order to provide reliable data regarding their geometrical properties and mechanical loading condition thereof.

For example, the work Dimitrios E. Kiousis, T. Christian Gasser and Gerhard A. Holzapfel, A Numerical Model to Study the Interaction of Vascular Stents with Human Atherosclerotic Lesions, Ann Biomed Eng. 2007;35(11):1857-69 represent the state-of-the-art FE modeling of the vascular bodies, which although considering volume effects of the structure, by discretizing the involved tissues by hexahedral elements, is a semiautomatic schema. The proposed concept therein requires expert knowledge in structural modeling and again several steps are involved, which is again inconvenient for technically challenging applications.

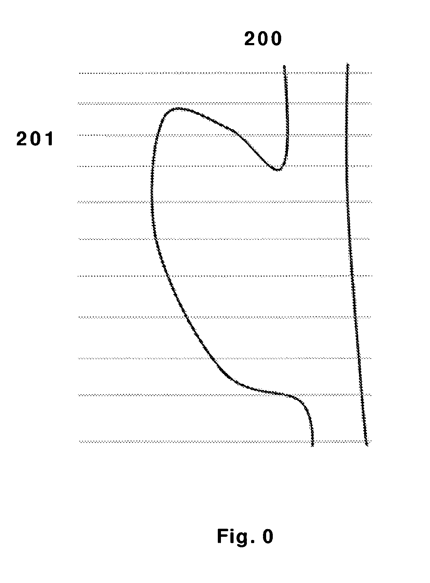

The semi-automatic reconstruction scheme disclosed in Kiousis, et al., Ann Biomed Eng. 2007, basically applies three steps to generate a computation grid for structural analyses:
1) In-plane segmentation using, e.g., NURBS representation of the edges, where deformable models are used on a single image slice, such that out-of-plane information of the set of image data is neglected. This concept can only be applied to a sub-class of geometries, and excludes, for example, saccular aneurysm, see figure 0, which are of important clinical relevance. Also, this concept cannot be applied to vascular bifurcations.
2) Generation of a solid model based on the edge information defined by the segmentation. Here always smoothing of the segmented curves is required, in particular to avoid scatter along the out-of-plane direction. This naturally alters the geometry, and hence, the geometry of the vascular body, as defined by the set of image data, cannot be maintained.
3) Meshing the solid model, which for realistic (clinically relevant) geometries of vascular bodies need to be subdivided into smaller bodies, which are simple enough to allow automatic meshing. This is usually a time-consuming task requiring engineering expert knowledge in mesh generation and structural analysis. Most important, in case the geometry is too complicated, even modifications of the solid model might be required to facilitate a meshing of the structure. Hence, the geometry of the vascular body, as defined by the set of image data, cannot be maintained.

In summary, currently known approaches are characterized by severe manual interactions and necessary engineering expert knowledge of the user, which does not allow their clinical application. Likewise, it needs to be emphasized that the image data used in Kiousis, et al., Ann Biomed Eng. 2007, referenced above, was based on in-vitro MR, where naturally much better image quality can be achieved compared to data sets from standard clinical imaging.

Moreover, a method to generate hexahedral FE meshes of the Abdominal Aortic Aneurysm (AAA) lumen and wall is disclosed by WOLTERS ET AL: "A patient-specific computational model of fluid-structure interaction in abdominal aortic aneurysms", MEDICAL ENGINEERING & PHYSICS, BUTTERWORTH-HEINEMANN, GB, vol. 27, no. 10, 1 December 2005, pages 871-883. The Intra-luminal Thrombus (ILT) is excluded in the method. The method uses a standardized bifurcated mesh as a predefined template, which in turn is transformed to fit the boundary surface triangulation. The wall thickness is set to a constant characteristic value.

A segmentation approach is suggested by MARTINO E S ET AL: "Fluid-structure interaction within realistic three-dimensional models of the aneurysmatic aorta as a guidance to assess the risk of rupture of the aneurysm", MEDICAL ENGINEERING & PHYSICS, ELSEVIER, UK, vol. 23, no. 9, November 2001, pages 647-655. Separate segmentation steps for the lumen and the wall are employed. Moreover, the applied method is based on a threshold concept, and hence, is only expected to work for set of image data providing enough difference in intensity across the luminal and exterior boundary of the Abdominal Aortic Aneurysm.

A segmentation technique where arterial tissue components are derived from ex-vivo high-resolution MRI is disclosed in AUER M ET AL: "3-D reconstruction of tissue components for atherosclerotic human arteries using ex vivo high-resolution MRI", IEEE TRANSACTIONS ON MEDICAL IMAGING, IEEE, USA, vol. 25, no. 3, March 2006, pages 345-357. The segmentation is based on a slice by slice approach, where information of the neighboring slices is considered. A semi-2D approach is adopted. The deformable model applied can only move in radial direction, and excludes the segmentation of more complex geometries, like saccular Abdominal Aortic Aneurysms. Moreover, the proposed method discriminates the out-of-plane direction, and hence, has a direction dependent accuracy.

A method for analyzing wall stress in Abdominal Aortic Aneurysm through FE analysis which employs 3D deformable models is disclosed by DE PUTTER S ET AL: "Automatic determination of the dynamic geometry of abdominal aortic aneurysm from MRI with application to wall stress simulations", INTERNATIONAL CONGRESS SERIES 1281 (2005), pages 339-344. The method reconstructs both the vessel lumen and the outer wall surfaces for volume meshing of a vessel wall with assumed constant thickness.

Hence, there is a need for fully automatic schema such that a detailed structural analysis of tubular bodies, such as vascular bodies, becomes clinically applicable. There is a need for a clinically applicable system for performing this schema by clinical users without engineering expert background. Furthermore, the schema should be applicable or usable with clinically available in-vivo 3D image data of patients having lower resolution than in-vitro 3D image data.

### Summary of the Invention

Accordingly, embodiments of the present invention preferably seek to mitigate, alleviate or eliminate one or more deficiencies, disadvantages or issues in the art, such as the above-identified, singly or in any combination by providing a system, a method, a computer-program, according to the appended patent claims.

The present invention uses a combination of 3D image reconstruction and hexahedral mesh generation. This allows a fast and robust generation of Finite Element meshes for a structural analysis of tubular bodies. This concept is considerable different from other approaches, e.g., presented by and cited in Kiousis, et al., Ann Biomed Eng. 2007, referenced above.

Differences of the present invention, in regard to existing approaches, make a fully automatic schema feasible, such that a detailed structural analysis of vascular bodies becomes clinically applicable. These differences allow even the development of a system to be operated by users without engineering background.

The fully 3D approach demonstrated by this invention, does not discriminate the out-of plane direction, such that no subsequent smoothing is required, and the accurate 3D geometry of vascular bodies remains maintained.

Finally, this invention defines a numerically robust and efficient methodology, which is applicable to clinically recorder sets of image data.

Embodiments of the present invention comprise a method and system for analyzing vascular bodies, with respect to their geometrical properties and mechanical loading conditions. To this end, the method or system generates geometrical and structural models of vascular bodies from standard sets of image data. The method or system works automatically and the vascular body is analyzed within clinical relevant times by clinical staff, i.e. users without expert knowledge in engineering. Clinical staff typically handling such systems clinically has no engineering background. Most critical in that sense is the integration of novel volume meshing and 3D segmentation techniques. The derived geometrical and structural models distinguish between structural relevant types of tissue, e.g., for abdominal aortic aneurysms the vessel wall and the intra-luminal thrombus are considered separately. The structural investigation of the vascular body is based on a detailed nonlinear Finite Element analysis. Here, the derived geometrical model, in-vivo boundary/loading conditions and finite deformation constitutive descriptions of the vascular tissues render the structural biomechanical problem. Different visualization concepts are provided and allow an efficient and detailed investigation of the derived geometrical and mechanical data. In addition, this information is pooled and statistical properties, derived from it, can be used to analyze vascular bodies of interest.

Relevant clinical times in which results are provideable by the method or system are in the range of minutes with current computational power usually clinically available.

According to a first aspect of the invention, a method is disclosed, which provides for automatic analyzing of geometrical properties and mechanical loading conditions of a tubular structure, such as of vascular bodies.

The method is a method for analyzing a substantially tubular body having a wall having a wall thickness as defined in claim 1.

The method may be applied to an entire portion of the tubular body including bifurcations and side branches.

Alternatively, the geometrical properties and internal loading data may be provided separately for further processing. Geometrical properties, i.e. data representing geometrical structures, are linked to the local mechanical properties thereof. Both geometrical structures and mechanical properties are provides as 3D data sets for further processing.

According to a second aspect of the invention, a system is disclosed, which provides for automatically analyses of geometrical properties and mechanical loading conditions of a tubular structure, such as vascular bodies.

The system is for analyzing a substantially tubular body having a wall having a wall thickness as defined in claim 15.

According to a third aspect of the invention, a computer program for processing by a computer is provided. The computer program comprises a code segment for a medical workstation that provides for automatic analyses of the geometrical properties and mechanical loading conditions of a tubular structure, such as vascular bodies.

The computer program is for processing by a computing device,' for analyzing a substantially tubular body having a wall having a wall thickness as defined in claim 11.

Components in this context are structural components of anatomical structures.

Further embodiments of the invention are defined in the dependent claims, wherein features for the second and subsequent aspects of the invention are as for the first aspect mutatis mutandis.

Embodiments of the present invention differ significantly from the prior art, e.g., mentioned in the Section 'Background of the Invention' in several aspects. Most significantly, some embodiments of the present invention provide for integrating all steps post patient scanning into a single (standalone) system, and hence, information regarding a patient specific vascular lesion, i.e. its geometrical properties and its mechanical loading conditions are provided within clinically acceptable times. A kernel of embodiments of the present invention may work fully automatically, which makes its clinically application and/or clinical acceptance feasible and no expert knowledge, e.g., in engineering is required for its application.

In addition, the present invention uses in some embodiments the concept of deformable models to reconstruct the geometry of vascular bodies, and hence, lower image quality, as compared to the reconstruction based on threshold approaches, may be processed and still get improved results. Deformable models have several advantages over threshold-based approaches, in particular when applied to medical images, see e.g., Suri et al., 2002, A review on 30 MR vascular image processing: skeleton versus nonskeleton approaches: Part II. IEEE Trans Inf Technol Biomed. 6,338-50. The approach applied by some embodiments of the invention directly impacts patient's safety, e.g., for image data from CT scanning the amount of contrast agents and/or x-ray radiation burden may be reduced. It is noteworthy, although the method described in Olabarriaga et al., 2005, uses the concept of deformable models, it requires a high threshold for its initialization.

Some embodiments of the invention provide for 3D accurate image segmentation based on deformable models. The applied concept renders a robust approach and the reconstructed and discretized (meshed) object may directly be used as the geometrical input for a FE analysis.

Some embodiments of the invention also provide for automatic quadrilateral meshing of the surface of vascular bodies.

Some embodiments of the invention also provide automatic hexahedral-dominated meshing of the volume of the vascular body, and hence, it allows the application of efficient mixed finite elements, e.g., the so called Q1P0 formulation, see Simo and Taylor, 1991, Quasi-incompressible finite elasticity in principal stretches. Continuum basis and numerical algorithms. Comp Meth Appl Mech Engrg. 85. 273-310. This is essential to represent the incompressibility properties of vascular tissue in a numerically efficient and proper way.

Some embodiments of the invention also provide for automatic 2D and 3D mesh smoothing and optimization to improve the quality of the FE mesh, and hence, the quality of the predicted results.

Some embodiments of the invention also provide for a fully 3D structural analysis of a tubular body, such as a vascular body, where different types of tissues are addressed separately.

It should be emphasized that the term "comprises/comprising" when used in this specification is taken to specify the presence of stated features, integers, steps or components but does not preclude the presence or addition of one or more other features, integers, steps, components or groups thereof. As used herein, the term "and/or" includes any and all combinations of one or more of the associated listed items.

### Brief Description of the Drawings

These and other aspects, features and advantages of which embodiments of the invention are capable of will be apparent and elucidated from the following description of embodiments of the present invention, reference being made to the accompanying drawings, in which
Fig. 0 is a schematic illustration of a saccular aneurysm;
Fig.1 is a flow chart illustrating automatic geometrical and mechanical analyses of vascular bodies, according to an embodiment, wherein the outlined system for performing the embodied method comprises a medical workstation and wherein some embodiments in the from of a computer program for implementing the method are stored on a computer readable medium for execution by the medical workstation;
Fig. 2 is an illustration of an image viewer of a graphical user interface of the system, which allows a user to explore a loaded set of image patient data and to define a Region of Interest, e.g. by mouse interactions;
Fig. 3 is an illustration of an initialization of a reconstruction in a 2D image of patient data, where a user may, for instance, place circular spots in the lumen of arteries, for the purpose of the initialization;
Fig. 4 is a flow chart illustrating an algorithmic formulation of a snake-model by means of a Finite Element (FE) problem and an iterative strategy to solve the arising non-linear numerical problem;
Fig. 5 is an illustration of a lumen in a 2D image of patient data, as it has been segmented by the snake-model of Fig. 4, wherein a bifurcating (in this non-limiting example: renal) artery is cut off, such that a geometrical complexity of the problem is reduced, whereby a FE analysis of the whole vascular body becomes feasible;
Fig. 6 (a) and (b) are schematic illustrations of a refinement strategy by introducing a line of nodes between adjacent snake nodes, wherein (a) illustrates a Tessellation without refinement, and (b) illustrates a Tessellation with refinement;
Fig. 7 (a), (b), and (c) are schematic illustrations of applied strategies to locally improve a mesh, wherein (a) illustrates removing of quadrilaterals at a border of a surface, (b) illustrates collapse of locking quadrilaterals, and (c) illustrates improving of ill-conditioned elements;
Fig. 8 is an illustration of a 3D reconstructed luminal surface of an AAA object, wherein the AAA object's surface is meshed by optimized quadrilateral elements;
Fig. 9 is a schematic illustration of a definition of (hexahedral) volume segments, which serves as a basis for meshing complex shaped vascular bodies;
Fig. 10 (a) is a schematic illustration of a strategy to mesh an arterial wall, which is based on the definition of volume segments;
Fig 10 (b) is a graph illustrating a functional relation between a thicknesses of an ILT and an arterial wall;
Fig. 11 is a schematic illustration of a strategy to mesh the ILT, which is based on the definition of volume segments and which generates predominately hexahedral elements;
Fig.12 is an illustration of the definition of the principal material axes according to the stress field of a structural pre-computation of the vascular body; and
Fig.13 is an illustration of the 3D visualization of the vMises stress (left) and rupture risk (right) of a particular AAA wall, wherein this information is color coded.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The following description focuses on embodiments applicable to analyze vascular lesions and in particular to AAAs or carotid stenoses. However, it will be appreciated that the invention is not limited to this specific application but may in some embodiments be applied to many other tube-like internal organs including for example other blood vessels, the trachea, urethra, esophagus, intestines, fallopian tubes, brain, atrial appendices including the left atrial appendix (LAA), coronary vessels, etc. or to external parts of the body, like extremities, including legs, arms, fingers, etc.. Moreover, some embodiments of the invention may also be applied to tubular portions of organs, like the heart, bones, etc.. Finally it is worth noting that some embodiments of the invention may also be applied to tubular structures in general, like pipe-lines, etc..

While stress analyses of engineering structures are well established and several analyzing tools are commercially available, the present invention makes this kind of analysis available to medical applications by means of a novel approach. Biological organs can have complex geometries, compared to engineering (man-made) structures, and their 3D reconstruction is another challenging aspect of the present invention.

In Fig. 0, a geometry is shown which cannot be reconstructed by planar approaches. Horizontal lines 200 denote scanning slices. Fig. 0 demonstrates the limitations of 2D segmentation compared to a fully 3D approach. In details, a schematic geometry (e.g., representing a saccular aneurysm), which hardly can be segmented by the 2D approach is sketched. Here, the parallel horizontal lines 200 represent the image slices, and the methodology described and referenced in Kiousis, et al., Ann Biomed Eng. 2007 (referenced in the text) cannot segment this type of relevant clinical geometries. Furthermore, it is worth noting that an issue with planar reconstruction is that it leads to significant scatter along the out-of-plane direction since image information is not considered in the reconstruction. As a consequence of that considerable smoothing is required and an accurate reconstructed geometry cannot be maintained. Embodiments of the invention overcome these drawbacks, amongst others. This is particularly advantageous for analysis of tubular structures like bifurcated structures, e.g. vessel branches, irregular structures like saccular aneurisms, brain or intestine windings, etc.

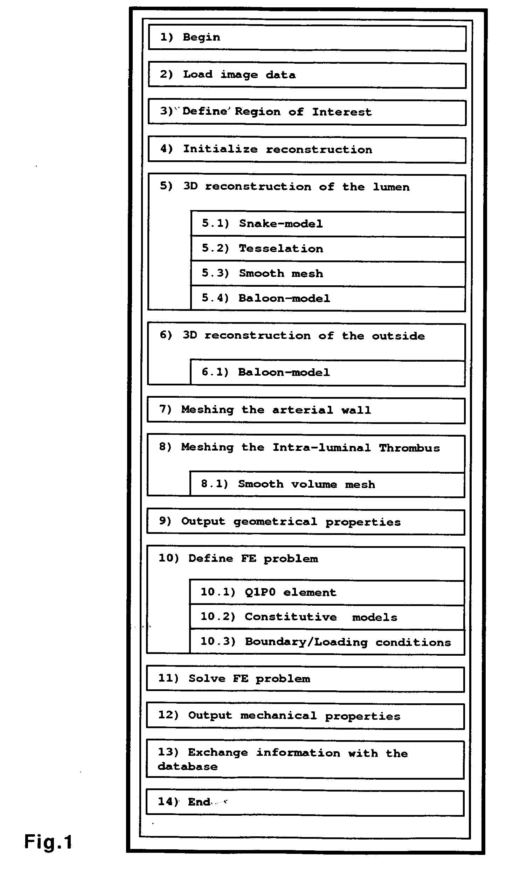

In Fig.1 such different (algorithmic) steps are described in more detail by means of embodiments of the invention, which are illustrated and the features thereof are described hereinafter.

### 1) Begin

This step allows a user to start the analyzing system. Alternatively, this step may also be entered automatically or upon request from other routines of a medical system, an image modality or a medical workstation related thereto.

### 2) Load image data

During this step a user loads patient specific data, e.g. in the form of standardized DICOM image patient 3D datasets comprising a plurality of 2D slices image patient data, into an analyzing system, e.g. a medical workstation. To this end, a graphical user interface may be utilized and image data and additionally, or optionally, other patient specific information data is are stored in the analyzing system's specific files.

### 3) Define Region of Interest (ROI)

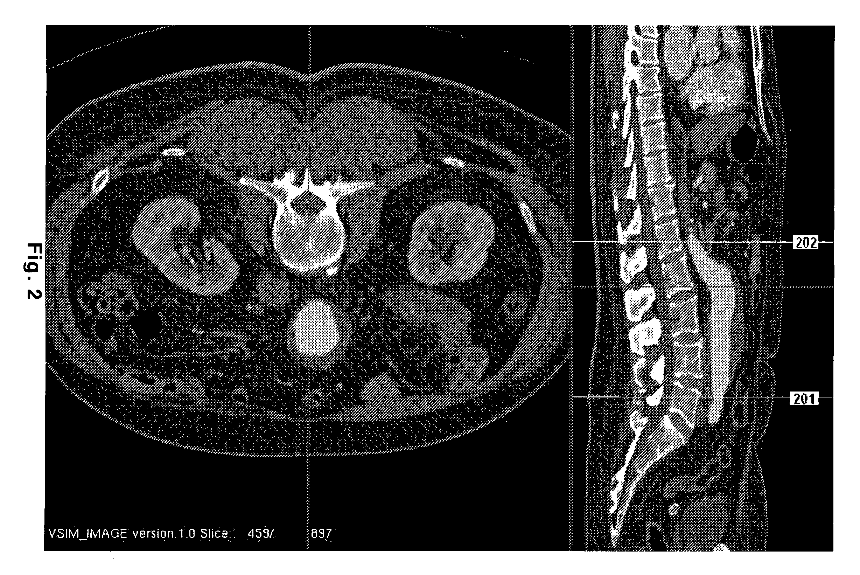

In an embodiment the medical workstation may have an image data viewer to analyze the loaded set of image data and to define the Region of Interests (ROIs) by means of a human interface device, e.g. by mouse actions, see Fig.2. To this end the ROIs are boxed by defining minimal (201) and maximal (202) axial coordinates of the image data set, i.e. axial limits of the reconstruction process. Here, GLUT and openGL may be utilized to process user interactions. Alternatively, or in addition, the ROIs may be automatically detected or semi-automatically detected (for confirmation or adjustment by a user of the medical workstation) by suitable image recognition methods, e.g., based on suitable object segmentation or identification methods.

### 4) Initialize Reconstruction

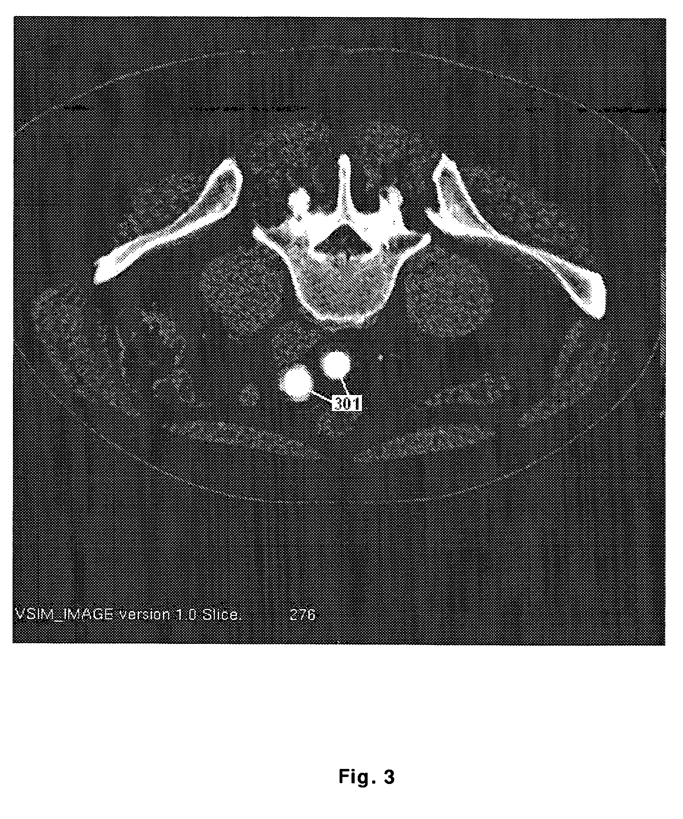

A particular 2D image slice of the 3D image patient dataset, e.g., at the bottom of the ROI, is used to define the initialization of the automatic reconstruction, i.e. where the reconstruction algorithm starts in space. To this end substantially circular spots, denoted by 301 in Fig.3, may be drawn by a user on the image slice in order to identify tubular structures, such as vessel walls in the 2D image slice. For a fast tracking of the luminal border, the spots should be as large as possible, but entirely inside the particular arterial lumen. Alternatively, or in addition, this boundary delimitation of the tubular structure may be made automatically or semi-automatically by means of suitable boundary detection algorithms known in the art. For geometrically complex shaped lesions, e.g., pseudo aneurysms, it may be more convenient to position the initialization region of the reconstruction to be made on a slice inside the ROI rather than on its borders. Some embodiments of the invention provide initializations on any 2D image slice within the ROI, and GLUT and openGL may be utilized to process user interactions.

### 5) 3D reconstruction of the lumen of the tubular structure

A sequence of method steps is applied to derive an accurate 3D reconstruction of the surface of the tubular structure, i.e. the lumen in this embodiment. The reconstructed surface defines the luminal border. The luminal border may subsequently be used, e.g., in a FE model, and hence, it is most critical to exclude elements disturbing a subsequent step, e.g., small bifurcating vessels and image artifacts.

### 5.1) Snake model

The initialization, as input in step 4), is used to define the initial configuration of a snake-model, which itself may be used to segment the lumen from the remaining anatomical information on the current image slice. Here, either one or more snake-models are used on a particular 2D image slice, depending on the number of lumens to be segmented. The underlying snake-model is driven by internal forces, due to bending, shearing and stretching of the snake, and external forces, due to the second gradient of the image and intensity dependent pressure-like loading. To this end, the image intensity in the vicinity of the pixel of interest is analytically approximated by a quadratic surface. Least-square fitting is used to define it, and the second gradient at the pixel of interest is computed by the second differentiation with respect to the spatial coordinates.

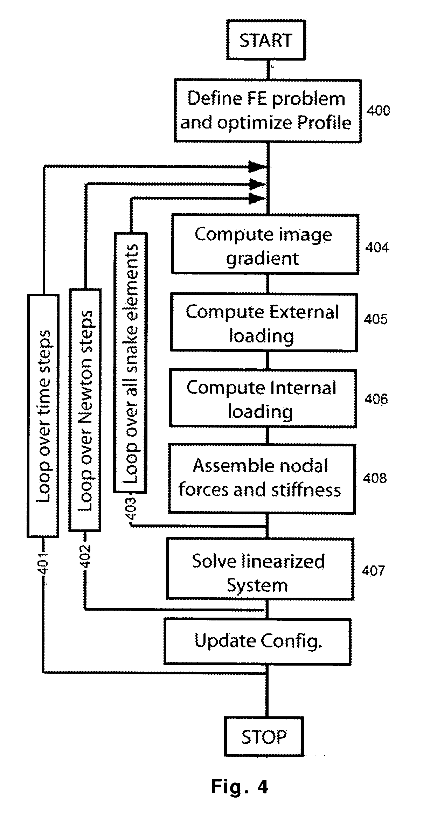

In order to compute the internal and external forces acting on the snake-model, the snake is discretized and represented by Beam Elements in the context of the FE method, see for instance Zienkiewicz and Taylor, 2005, which is referred above. Hence, the snake is approximated by a number of nodal points, which are connected by Beam Elements. Finally, this renders a non-linear mechanical problem, which is formulated in a typically FE schema, see Fig. 4. Fig. 4 is a flow chart illustrating an algorithmic formulation of a snake-model by means of a Finite Element (FE) problem and an iterative strategy to solve the arising non-linear numerical problem.

In more details, in some embodiments, bandwidth optimization of the global stiffness matrix 400 is performed to render an efficient and stable numerical system, and the load onto the snake-model is incremented according to a finite number of time steps 401. An iterative Newton schema 402 is applied at each time step, i.e. within the loop of Newton steps the linearized system of equations is solved 407 until the equilibrium of the snake is determined for the current time step. Finally, the (linearized) global system of algebraic equations is assembled 408 within the loop over all snake elements 403, where the first and the second image gradients 404, external 405 and internal 406 nodal forces and nodal stiffnesses are calculated.

In summary, the nonlinear snake problem is solved iteratively until the snake successfully segments the lumen from the remaining anatomical information on the image slice.

In order to handle the arising (mechanical) problem, viscosity may be added, which basically stabilizes the movement of the snake. To achieve a faster convergence, the amount of viscosity is linked to the norm of the image gradient.

The snake-model is applied iteratively until all luminal borders on all slices in the ROI are segmented. During this iterative process the geometrical information is stored in the RAM of the computer system, e.g., the medical workstation, and the snake-model is initialized with the luminal border on the previous (already segmented) image slice. Again, one or more snake-models are used on a particular image slice. If two snake-models overlap, as it is the case at bifurcations, they are joined to a single one. In order to achieve an equidistant distribution of nodes representing the segmented lumen, the number of snake nodes is adapted from image slice to image slice accordingly to a predefined distance.

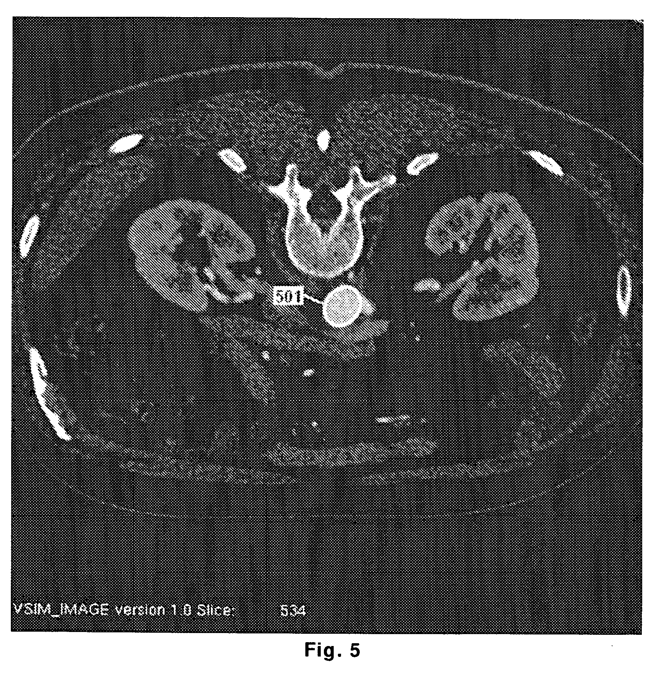

For illustrative purposes, the lumen on slice No. 534 of the loaded CT dataset, as it has been segmented by the snake-model, is shown in Fig.5. Note that the snake-model, denoted by 501, segments the aortic lumen and the bifurcating (renal) lumen is cut off, in order to reduce the anatomical complexity, and hence, make a FE analysis of the whole vascular body feasible. The basic concept presented in this section has conceptional similarities with the other image based reconstruction methods, e.g., as outlined and refereed in Kiousis, et al., 2007, which is referenced above, however, there are substantial differences, for instance the formulation as a FE problem by the present invention has significant efficiency advantages. It is emphasized that the remaining steps of the image segmentation state a fundamental novel concept of the present invention. Most important, the invented approach allows a fast hexahedral-dominated mesh generation of complex even multiple bifurcated tubular objects to be discussed later. This has efficiently hitherto not been possible.

### 5.2) Tessellation

The geometrical information in terms of logically arranged snake nodes (point cloud), as provided by the segmentation in step 5.1, is used to tessellate the luminal surface. Here a mesh of the luminal border is generated, where quadrilaterals are used to represent the geometrical object. Alternatively, triangles may be used and the information may be exported, e.g. in STL format, to be used by other computer programs. Here, it is worth noting that the applied hierarchical concept is essential to make a tessellation with quadrilaterals feasible. Tessellation with quadrilaterals is conventionally computational much more demanding and resulted prior to present invention to clinically unacceptable computation times.

The underlying algorithm considers the point-wise description of two subsequent luminal borders, as segmented by the snake-model in step 5.1, and the concept of dynamic programming is used to compute an optimal tessellation. In particular, a cost function, e.g. the area of the tessellated surface, is minimized. At the bifurcation the algorithm tessellates (joins) two luminal surfaces on one image slice with a single luminal surfaces on the neighboring slice. To this end, the single luminal surface is split and both parts are uniquely associated with the two luminal surfaces on the neighboring slice. Consequently, the identical algorithm, as defined above, can be applied to tessellate the main part of the vessel bifurcation and the remaining (open) part of the surface can be tessellated in a simple second step. The concept renders an efficient approach, which is linear with respect to the number of (snake) points used to describe the luminal surface.

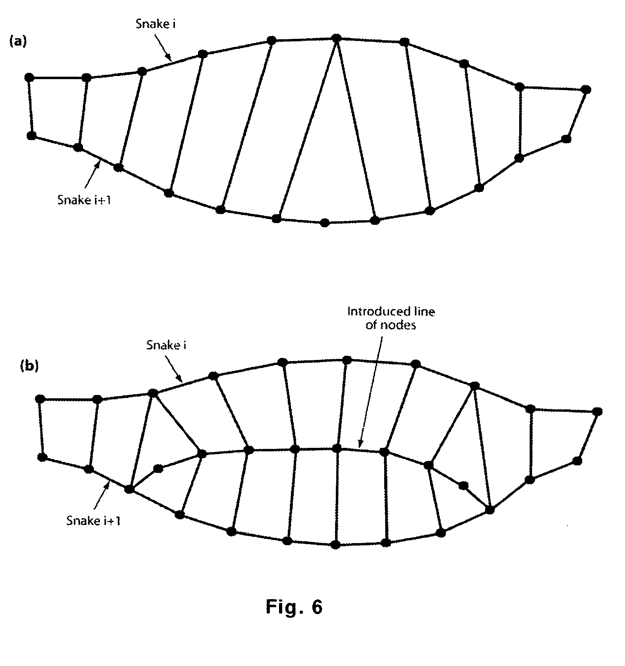

To avoid elements with bad aspect ratio, additional nodes are introduced, if the distance between associated points becomes too large. To this end an additional line of nodes is introduced in such a way, that the above described tessellation algorithm may again be applied, see Fig. 6. Finally it needs to be emphasized that the integrated surface meshing as proposed by embodiments of this invention is again fundamental different to the approach proposed in Kiousis, et al., 2007, which is referenced above, and crucial for an automatic reconstruction schema.

### 5.3) Smooth mesh

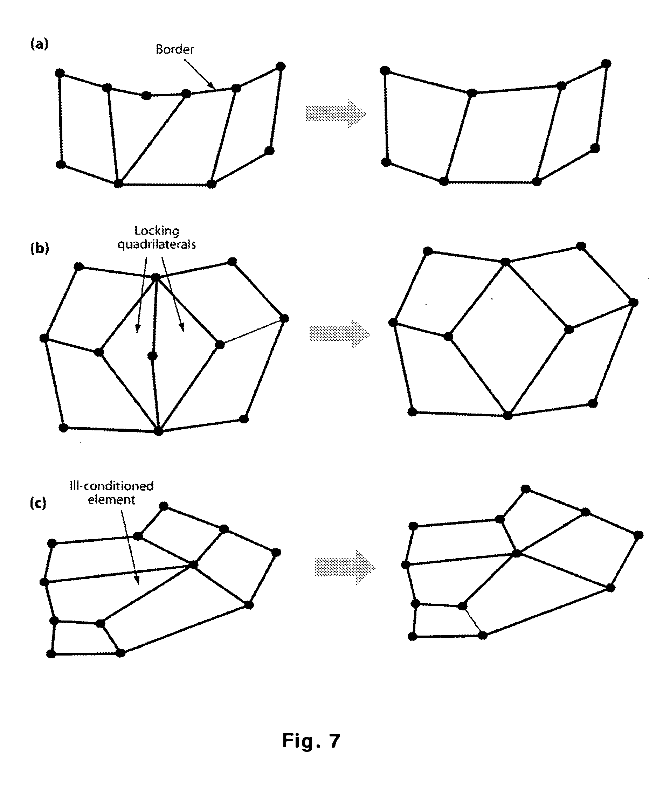

The tessellation described in 5.2 keeps the nodal points of the lumen fixed, and naturally, the generated mesh includes surface elements of poor conditions, such that a direct application within the FE method would cause large local errors. Consequently, the surface mesh needs to be improved, and here, mesh smoothing and local element improvement are iteratively applied until the mesh is optimized. Here in some embodiments, e.g., Laplacian smoothing may be utilized and the considered strategies of local element improvement are illustrated in Fig. 7.

In particular, in Fig. 7 (a) it is illustrated how poor quadrilaterals at the border of the surface may be removed, in Fig. 7 (b) it is illustrated how quadrilaterals, which lock each other during the smoothing algorithm are collapsed, and in Fig. 7 (c) it is illustrated how ill-conditioned elements may be improved. Finally, it is worth noting that surface mesh smoothing may be applied to both type of meshes, i.e. quadrilateral and triangular, while local element improvement is only performed for the quadrilateral meshes.

### 5.4) Balloon model

Note that the discussed smoothing of the surface mesh in step 5.3 changes its topology, and hence, it does no longer describe the lumen, as it is given by the set of image data, accurately. (This is also one disadvantage of presently available reconstruction schemas discussed in the section 'Background of the Invention'.) In order to account for that, the optimized surface mesh from step 5.3 may be used to initialize a balloon-model. The balloon-model segments the luminal border accurately by taking into account the fully 3D information of the 3D image data set.

To this end the structural effect of a balloon is modeled by Shell Finite Elements, wherein any suitable type of formulation may be applied, e.g., discrete Kirchhoff may be applied, see, e.g. Zienkiewicz and Taylor, 2005, which is referenced above. Internal forces, such as due to membrane deformation and plate bending and shearing, and external forces, e.g. due to the second gradient of the image and intensity dependent pressure-like loading, drive the balloon-model, which is again formulated as a FE problem, i.e. similar as outlined above with reference to Fig. 4 for the snake model. The image intensity in the vicinity of the voxel of interest is analytically approximated by a quadratic hyper-surface. Least-square fitting is used to define it, and the second gradient at the voxel of interest is computed by the second differentiation with respect to the spatial coordinates. The arising nonlinear FE problem is solved iteratively until the lumen is segmented and the geometrical information is saved in the RAM of the computer system, e.g. of the medical workstation. Again viscosity may be added to the numerical system to stabilize it, where its amount is related to the norm of the image gradient.

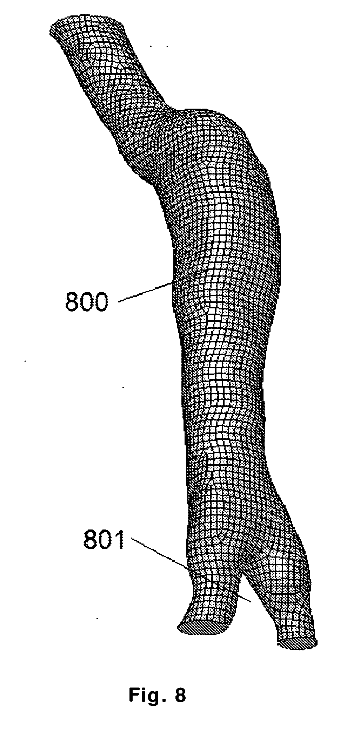

The described approach is implemented fully in 3D and a typically outcome of the segmentation algorithm is illustrated by the quadrilateral surface mesh of the luminal border of a particular AAA in Fig.8. In Fig. 8 a 3D reconstructed luminal surface of an AAA object is shown, wherein the AAA object's surface is meshed by optimized quadrilateral elements 800 and the aortic bifurcation 801 is included.

Finally it is emphasized that this approach renders a fully 3D schema, which does not discriminate the out-of-plane direction, as it is in common with other approaches, e.g., proposed in Kiousis, et al., 2007, which is referenced above. Most important, it does not require smoothing to avoid scatter of the reconstruction along the out-of-plane direction, and hence, more accurate results can be achieved.

### 6) 3D reconstruction of the outside of the tubular structure

In this step, the luminal surface, as segmented in step 5 elucidated above, may be duplicated and serves thus as an initialization of a further balloon-model, which is used to segment the outside of the object, i.e. the tubular structure, such as a vessel wall. Hence, the lumen (or inside surface of the tubular structure) and the outside of the segmented tubular structure, such as the vascular body, are represented by related meshes, i.e. pairs of luminal and outside points may be defined uniquely. This is an essential property of the applied concept and allows straight forward meshing of the whole volume to be discussed in subsequent steps 7) and 8) described further below.

### 6.1) Balloon-model

In order to apply a balloon model to segment the outside, some modifications with respect to the one discussed in step 5.4) are required. Most critical is the deactivation of the high image gradient at the luminal border. To this end, the lumen (as represented within the set of image data) is in some embodiments replaced by the average intensity (gray value) of the volume of the 'outside neighborhood' of the segmented lumen. Finally, the constraint, that the distance between related luminal and outside points is larger than a predefined minimal thickness of the vessel, may in some embodiments be satisfied by a geometrical post correction step. Again, the balloon-model is formulated as a nonlinear FE problem and solved interactively until the outside of the object is segmented and the geometrical information data is available, e.g. saved in the RAM of the computer system, such as the medical workstation.

### 7) Meshing the wall of the tubular structure, such as the arterial wall

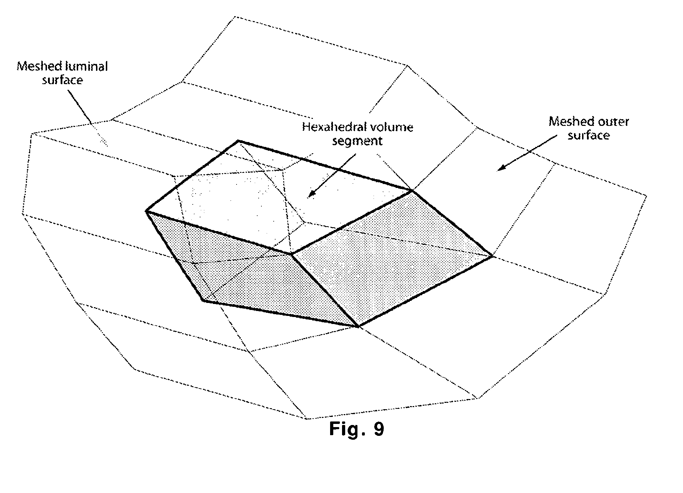

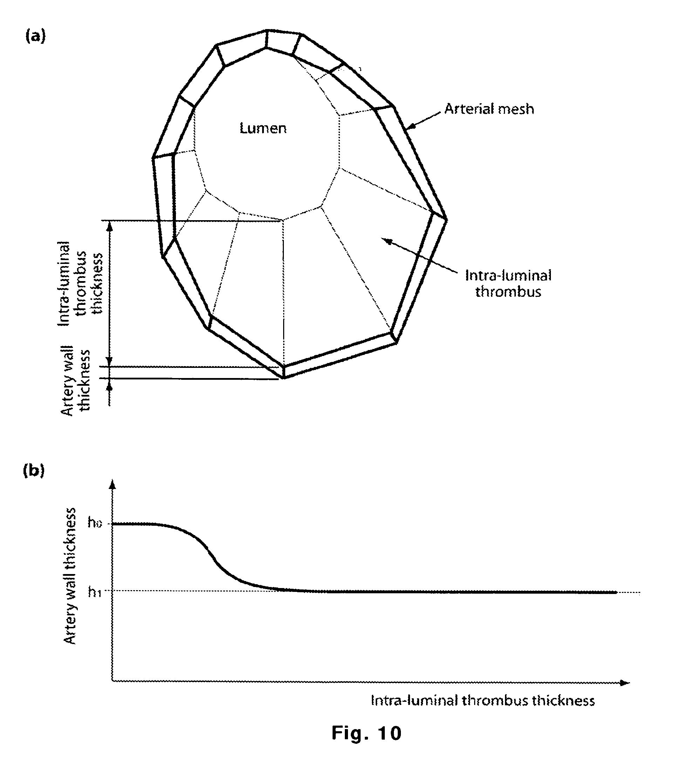

Embodiments of the present invention use related luminal and outside meshes, i.e. each node on the luminal border has a duplicate at the outside border, which leads to a straightforward volume meshing of the arterial wall. To this end (hexahedral) volume segments can be defined, as it is illustrated in Fig. 9. This subdivision of the vascular body serves as the basis for the meshing algorithm of the arterial wall, which is shown in Fig. 10(a), where for simplicity a single element across the wall thickness has been used.

Again it renders a fully 3D schema, which in contrast to, e.g., the approach proposed in Kiousis, et al., 2007, which is referenced above, does not require subsequent smoothing, and hence, the accurate outside geometry of the tubular body can be reconstructed.

If the distance between related luminal and outside points is larger than a predefined largest thickness, the presence of Intra-luminal Thrombus (ILT) is assumed in some embodiments. In this case the data from the segmentation, i.e. steps 5) and 6), is enriched by predefined information about the wall thickness. According to reported data in the literature, see, e.g. Kazi et al., 2003, Influence of intraluminal thrombus on structural and cellular composition of abdominal aortic aneurysm wall, J Vasc Surg 38, p. 1283-1292, the wall thickness may be assumed to be substantially dependent on the thickness of the underlying ILT. This is in some embodiments evaluated by the distance between the related luminal and outside points. A functional relation between vessel wall thickness and ILT thickness, such as shown in Fig. 10(b), may in some embodiments be used to define the mesh of the arterial wall. Here, h0 and h1 denote the thickness of ILT-free and ILT-covered arterial wall, respectively.

Better wall meshes might be achieved by introducing another balloon model defining the interface between ILT and wall. Most important in that respect, the balloon model has to be a duplicate of the outside balloon model, such that again pair wise nodes can be defined. Penalty forces might be applied at the nodes of the balloon model until the predefined wall thickness, e.g., defined by Kazi et al., 2003, referred above, is reached. This in turn renders a structural problem to be solved by the FE technique discussed above.

Finally, it is emphasized that the (to some extent) structural mesh allows for anisotropic mesh refinement, i.e. differently in thickness and circumferential/axial directions. This is a desired advantageous property, since expected stress gradients in thickness direction might be significantly different to the one in circumferential/axial direction.

### 8) Meshing the Intra-luminal Thrombus (ILT)

Again, the volume meshing of the ILT is easy to realize, since some embodiments of the present invention use related luminal and outside meshes. A stepwise volume meshing algorithm, which generates predominately hexahedral brick elements, is applied to mesh the ILT. The algorithm starts at the outside of the ILT (which is the inside of the arterial wall) and meshes step-by-step towards the luminal border of the object. As long as a (hexahedral) volume segment, see Fig.9, is not entirely meshed, it remains active, and all active volume segments are meshed (step-by-step) from the outside to the luminal side. Volume segments are connected by their radial edges with each other, and hence, the connectivity of the mesh is enforced via these edges.

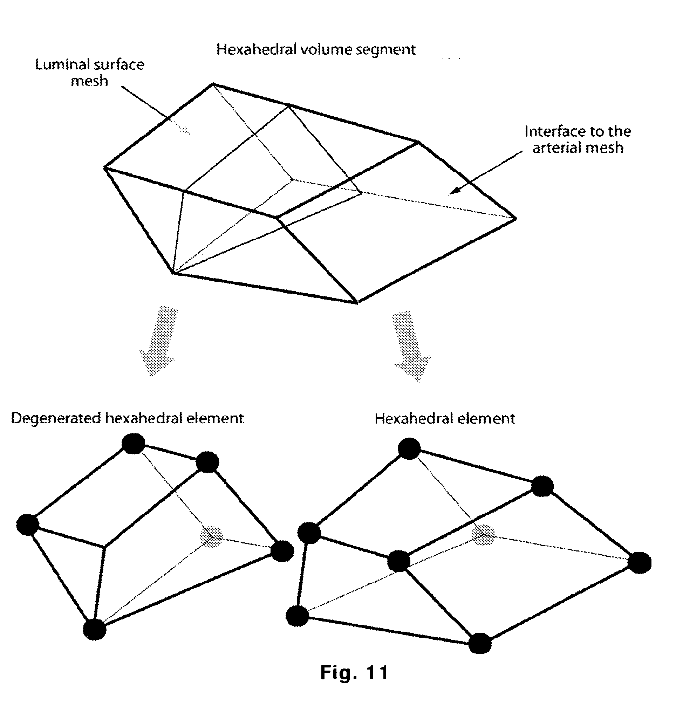

The meshing schema is illustrated in Fig.11, where for simplicity only two elements in thickness direction are considered. Note that the algorithm generates predominantly hexahedral elements (only the very luminal element might be a degenerated hexahedral element, where two to four nodes collapse) and the radial dimension of the volume mesh can be controlled independently in order to generate an appropriate (anisotropic) mesh. Alternatively, the generated mesh may be split into a tetrahedral mesh, as it might be useful for some reasons, e.g. to import the mesh into other programs.

Again, better meshes might be achieved by moving a balloon-model step wise from the ILT wall interface towards the lumen; analogous as discussed in step 7 above. Statements regarding mesh refinement are similarly valid as discussed in section 7.

### 8.1) Smooth volume mesh

The (predominately) hexahedral brick mesh of the vascular body, as generated at steps 7) and 8) needs to be smoothed (e.g., using a constraint Laplacian method), to be used as the geometrical input of a FE analysis. Here, surfaces representing the vascular body or parts of it, e.g. luminal surface, outer surface and interfaces between types of tissues are constrained, and hence, their accurate geometry remains maintained. In addition the highest distorted elements might be improved by moving the connected nodes and optimizing a quality criteria depending on the type of element.

### 9) Output geometrical properties

During the previous steps the geometry of the tubular body, here a vascular body, has been entirely defined (in terms of a FE discretization) and this step is used to output key geometrical quantities. To this end, scalar quantities are prompt, e.g. ILT volume, outer diameter of the infrarenal aorta, max. outer diameter, max. local ILT thickness, max. local ILT area, min. and max. radius of luminal and outer curvatures, min. centerline curvature, asymmetry index, saccular index, etc. or presented in diagrams, e.g., ILT area, luminal area, principal radii of the luminal curvature, principal radii of the outer curvature, principal radii of the centerline curvature, outer diameter, etc. with respect to, e.g., the centerline. In addition or alternatively, geometrical quantities may be plotted on top of the geometrical object itself, e.g. the ILT thickness, principal radii of the luminal, principal radii of the outer curvature, etc. on the luminal or outer surface of the vascular body. To this end, the visualized properties are color coded or contour plots are used instead. Here GLUT and openGL may be utilized and a user can explore the data by means of mouse interactions. For example, models may be rotated and enlarged using standard mouse actions and the quantity or region to be visualized is chosen, e.g. from a pull-down menu.

### 10) Define FE problem

The generated volume meshes at steps 7) and 8) are used as computational FE grid for a structural analysis. In order to render an entire FE problem, the geometrical information (FE-mesh) is enriched by boundary/loading conditions and constitutive properties of the involved vascular tissues.

### 10.1) Q1P0 element

In view of the incompressible nature of, e.g., vascular tissue, a mixed FE approach is followed and volume looking phenomena of the FE model are avoided. In particular, the mixed FE element Q1P0, see Simo and Taylor, 1991, referenced above, may be utilized in some embodiments, which the inventors in practical implementations have found to be a very efficient FE formulation in the present context.

### 10.2) Constitutive models

The constitutive description of the involved types of tissue is a crucial part of a reliable prediction of the internal mechanical loading (stress field) of the vessel. For the arterial wall a histological motivated formulation may be applied, which allows an isotropic or anisotropic non-linear description of the wall, such as described in Gasser et al., 2006, Review: Hyperelastic modelling of arterial layers with distributed collagen fibre orientations, J R Soc Interface, 3, p. 15-35. For example, to model AAAs, the set of material parameters, involved in the constitutive formulation, may be defined by a least square fitting of the experimental data, such as given in Vande Geest et al., 2006a, The effects of aneurysm on the biaxial mechanical behavior of human abdominal aorta, J Biomech. 39, p. 1324-1334.

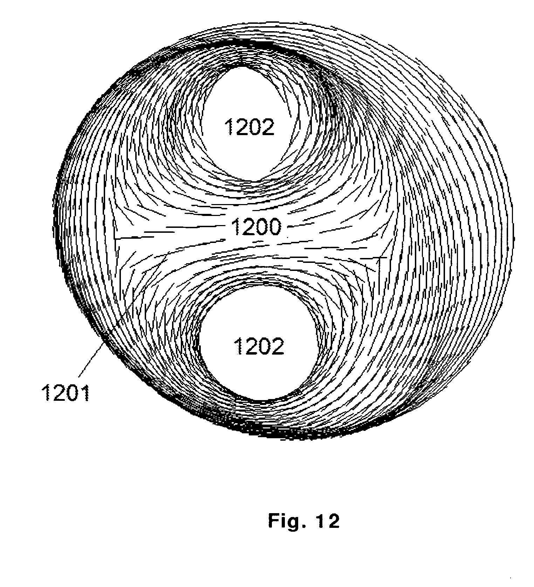

The application of an anisotropic constitutive model requires the definition of the principal material axes (within which the anisotropy can be related locally) throughout the whole arterial wall. This directional information may be generated by a structural pre-computation, where the arterial wall may be pressurized on the inside and a simple isotropic constitutive model, e.g., a neoHookean may be used. The computed stress field, which quantitatively might have nothing in common with the real stress state, is used to define the material principal axes. In detail, the principal stress directions are assumed to coincide with the principal material axes. As long as the arterial wall is thin (e.g., compared to the diameter of the vascular body) this gives always a realistic prediction of the principal material axes, as illustrated in Fig. 12. Here, line elements 1201 are used to visualize one principal axis and one looks along the blood flow direction into a vascular bifurcation 1200, where labels 1202 denote the iliac arteries.

For the ILT tissue a one parameter model ψ=c(λ*₁⁴*+λ*₂⁴*+ λ*₃⁴ -3)* of Ogden type is used in an embodiment, where ψ and λ*ᵢ*, *i=1,2,3* denote the free-energy function and the principal stretches, respectively. The involved material parameter *C* can be defined by least square fitting of available experimental data in the literature, e.g. found in Vande Geest JP et al., 2006b, A planar biaxial constitutive relation for the luminal layer of intra-luminal thrombus in abdominal aortic aneurysms. J Biomech. 39. 2347-2354.

### 10.3) Boundary/Loading conditions

Two different Boundary/Loading conditions may be applied, i.e. (i) fixing the displacements at the nodes of the computational grid at the top and bottom boundaries of the ROI or (ii) fixing the nodes at one boundary of the ROI and apply an axial load at the nodes of the other boundary of the ROI, according to the in-vivo (blood) pressure and the luminal area thereat. In-vivo (blood) pressure loading, in terms of a deformation depending follower load may be applied on the luminal surface of the vascular object. The considered pressure may be predefined and may perhaps be modified by the user of the system.

### 11) Solve the FE problem

Step 10) entirely renders a 3D structural FE problem of the vascular body to be investigated. In standard finite deformation FE computations, the reference configuration is given and the deformed configuration (according to the applied external loading) is unknown, i.e. it needs to be computed. However, in the current context the reconstructed geometry states already the deformed configuration due to the in-vivo loading situation, and its reference configuration is unknown and need to be computed. To this end, an iterative solution schema is applied, similar to the non-linear standard FE approach, where the external loading is step-wise increased until the required load level is reached. However, instead of the current configuration the reference configuration might be iteratively updated during the loading steps. Once the mechanical problem is solved, the internal mechanical loading in terms of the six components of the stress tensor is stored, e.g. in a system specific file format. The most time consuming step in solving the numerical problem is the solution of the arising linearized system of equations, and hence, profile optimization schemas and/or sparse storage schemas for direct solvers and appropriate preconditioning for iterative solvers are necessary. In addition parallel solution strategies for both types of solvers may be applied to shorten computation time.

### 12) Output mechanical properties

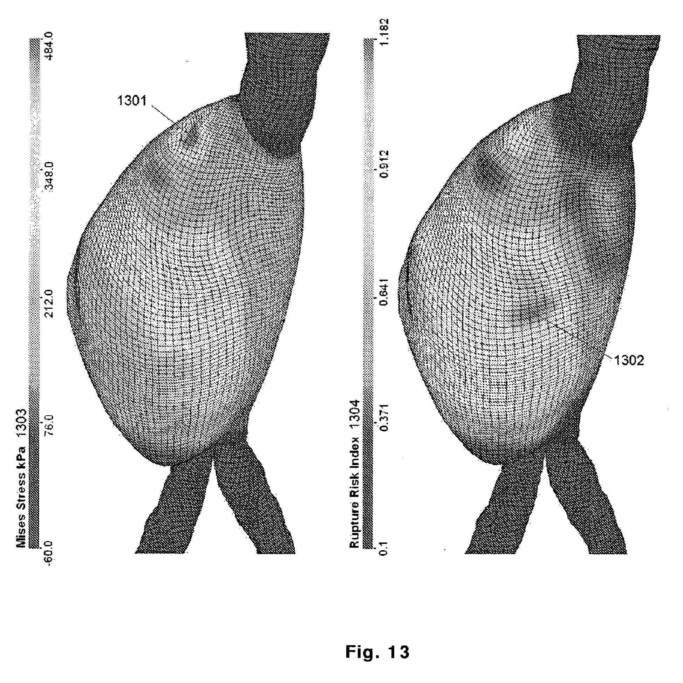

Mechanical quantities, e.g. to be visualized or used for further processing such as automated diagnostics, (e.g. vMises stress, max. principal stress, max. shear stress, etc.) are derived from the computed mechanical stress tensor. The mechanical quantities may be visualized, e.g., color coded, as contours, etc., on top of a rendered visualization of the geometrical 3D object itself. Here GLUT and openGL may be utilized and a user may conveniently explore the data by means of mouse interactions, as discussed above in step 9). In Fig. 13 an example of such visualization is illustrated by means of a color coded images representing the vMises stress (left) and the rupture risk index (right), of the AAA wall. Here, red areas indicate either high mechanical stress 1301 or high rupture risk 1302, where their quantifications are given by the particular color codes, i.e. 1303 for the stresses and 1304 for the rupture risk.

Finally, mechanical stress might be related to local strength of the object, e.g., to the strength of the wall and the ILT of an AAA, and visualized to assess its likelihood of failure (rupture). To this end the local strength of, e.g., the wall and ILT of an AAA might be calculated according to the present literature, e.g., Vande Geest et al., 2006c, Towards a noninvasive method for determination of patient-specific wall strength distribution in abdominal aortic aneurysms. Ann. Biomed. Eng., 34:1098-1106. A color coded visualization of the rupture risk is demonstrated in Fig. 13 (right).

### 13) Exchange information with the database

A user can up- and download computational models of the vascular body, i.e. its discretized 3D geometry, as generated at step 7) and the mechanical data, as generated at step 11). Hence, geometrical and mechanical data of vascular bodies is pooled and stored in a database, and the user may access this information using file transfer protocol. In addition, statistical distributions of key quantities, e.g., ILT volume, max. wall stress, max. ILT stress, max. diameter, max. ILT thickness etc. are derived and stored from the pooled models. Users can download this statistical information to analyze their computational models of vascular bodies.

### 14) End

This step allows a user to terminate the analyzing system. Alternatively, other steps may follow, e.g. branching to other image analysis and treatment software, analysis of a new structure or a new patient, etc. Geometrical and mechanical data of vascular bodies may be provided for further processing, e.g. virtually planning a surgical procedure. The surgical procedure may comprise virtually planning of positioning a suitable medical graft. The medical graft may be patient configured based on this virtual planning. The virtual planning may then provide data for manufacturing a real medical graft. A method of manufacture a medical implant, such as a graft vessel, includes the above method providing geometrical and mechanical data of tubular bodies, the above mentioned method of virtually planning a surgical procedure, and producing a real medical implant based on data provided by the latter method.

In this manner regions with specific mechanical properties may be readily identified. For instance a risk of rupture of an AAA may be determined or diagnosed. This diagnosis may be made manually by a skilled practitioner analyzing the visualization, or semi-automatically, e.g., by the system giving an indicator of risk of rupture of a certain region based on the mechanical properties determined, or automatically by a suitable algorithm determining a risk of rupture, and/or an estimated time to rupture. The statistical distributions of key quantities may facilitate the diagnosis as primary or secondary aspects of the diagnosis. Hence, an effective and reliable diagnosis of a tubular structure and the mechanical load thereof may be provided in a convenient manner by embodiments of the invention. Based on such a diagnosis a suitable therapy may be initiated to prevent a rupture of the AAA, e.g., in a medical procedure reinforcing the region of the AAA with a suitable medical graft. A surgical procedure may be virtually planned based on such a diagnosis, as explained above under section 14). A medical workstation, as mentioned above, comprises the usual computer components like a central processing unit (CPU), memory, interfaces, etc. Moreover, it is equipped with appropriate software for processing data received from data input sources, such as data obtained from image modalities or from suitable data carriers, e.g., in DICOM format. The software may for instance be stored on a computer readable medium accessible by the medical workstation. The computer readable medium may comprise the software in form of a computer program comprising suitable code segments for performing methods according to above described embodiments. The medical workstation further comprises a monitor, for instance for the display of rendered visualizations, as well as suitable human interface devices, like a keyboard, mouse, etc., e.g., for manually fine tuning an automatical diagnosis otherwise provided by the software.

It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As will be appreciated by one of skill in the art, the present invention may be embodied as a system, method or computer program product. Accordingly, the present invention may take the form of an entirely hardware embodiment, a software embodiment or an embodiment combining software and hardware aspects all generally referred to herein as a "code segment" or "unit." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for analyzing a substantially tubular vascular body having a wall having a wall thickness, said method comprising
3D reconstructing (5, 6) of at least one structural component of at least a portion of said vascular body from sets of image data,
generating (7) a quadrilateral and/or a hexahedral Finite Element (FE) mesh of said at least one structural component,
performing (11) a structural nonlinear FE analysis of said at least one structural component, and
therefrom providing (12) information data regarding geometrical properties and internal mechanical loading of at least a sub-portion of said portion of said tubular body for said analyzing of said tubular body, wherein said generating said quadrilateral and/or hexahedral Finite Element (FE) meshes comprises using related luminal and outside meshes of said wall of said vascular body, wherein each node on a luminal inside border of said wall has a duplicate at an outside border thereof for volume meshing of said wall, **characterized by**
determining from said nodes of said meshes a distance between each of said duplicate nodes as said thickness of said wall at said duplicate nodes,
and wherein said meshes are used as a geometrical input for said FE mesh generation.

2. The method according to claim 1, wherein said providing information data regarding geometrical properties and internal mechanical loading of at least a sub-portion of said portion of said vascular body comprises automatically analyzing said information data regarding geometrical properties and internal mechanical loading of at least a sub-portion of said portion of said vascular body.

3. The method according to claim 1, further comprising
loading (2) and pre-processing of patient image data,
viewing image data sets,
defining (3) a Region Of Interest (ROI),
initializing (4) a reconstruction process,
manually enriching information of the set of image data,
segmenting the lumen of the vascular body from the remaining anatomical information of the set of image data,
executing 2D and 3D deformable models, e.g., snake-and balloon-models, to segment the set of image data,
segmenting the outside of the vascular body from the remaining anatomical information of the set of image data,
generating quadrilateral and hexahedral meshes of different vascular tissues for FE analyses,
analyzing the vascular body's geometrical properties and internal mechanical loading,
prompting messages, changing software-related properties and saving data to a computer-readable medium,
up- and downloading of information to and from a database.

4. The method according to any preceding claim, comprising integrating all steps post patient scanning into a single system, and providing information regarding a patient specific vascular lesion, i.e. its geometrical properties and its mechanical loading conditions.

5. The method according to claim 1, wherein said method comprises using deformable models for reconstructing a geometry of said vascular body, and/or comprising a fully 3D structural analysis of said vascular body, wherein different types of material are addressed separately, and/or wherein said method comprises providing access (13) to pooled data of vascular bodies.

6. The method according to claim 1, wherein said reconstructing of at least a component comprises a 3D image segmentation based on deformable models and wherein said reconstructed and discretized component object may directly be used as a geometrical input for said FE analysis.

7. The method according to claim 1, 5 or 6, wherein said method comprises providing a quadrilateral meshing of at least one surface of said vascular body.

8. The method according to claim 1, 5, 6 or 7,
wherein said method comprises providing a hexahedral-dominated meshing of a volume of the vascular body, applying mixed finite elements for said FE analysis.

9. The method according to claim 8, wherein said mixed finite elements comprise a Q1P0 formulation.

10. The method according to claim 5, wherein different types of vessel tissues are addressed separately.

11. A computer program for processing by a computing device, for analyzing a substantially tubular vascular body having a wall having a wall thickness, said computer program comprising
a first code segment for 3D reconstructing of at least one structural component of at least a portion of said vascular body from sets of image data,
a second code segment for generating a quadrilateral and/or hexahedral Finite Element (FE) mesh of said at least one structural component.
a third code segment for performing a structural nonlinear FE analysis of said at least one structural component, and
a fourth code segment for therefrom providing
information data regarding geometrical properties and internal mechanical loading of at least a sub-portion of said portion of said vascular body for said analyzing of said vascular body, wherein said generating said quadrilateral and/or hexahedral Finite Element (FE) meshes comprises using related luminal and outside meshes of said wall of said vascular body, wherein each node on a luminal inside border of said wall has a duplicate at an outside border thereof for volume meshing of said wall, **characterized by**
determining from said nodes of said meshes a distance between each of said duplicate nodes as said thickness of said wall at said duplicate nodes,
and wherein said meshes are used as a geometrical input for said FE mesh generation.

12. The computer program of claim 11, further comprising
a code segment for loading and pre-processing of patient image data,
another code segment for viewing image data sets,
another code segment for manually enriching information of the set of image data,
another code segment for defining a Region Of Interest (ROI), and
another code segment for initializing the reconstruction process.

13. The computer program of claim 12, further comprising
another code segment for segmenting the lumen of the vascular body from the remaining anatomical information of the set of image data,
another code segment for executing 2D and 3D deformable models, e.g., snake- and balloon-models, to segment the set of image data,
another code segment for segmenting the outside of the vascular body from the remaining anatomical information of the set of image data,
another code segment for generating surface meshes of the different vascular tissues for FE analyses,
another code segment for generating volume meshes of the different vascular tissues for FE analyses,
another code segment for analyzing the vascular body's geometrical properties and internal mechanical loading,
another code segment for prompting messages, changing software-related properties and saving data to a computer-readable medium,
and another code segment to up- and download information to and from a database.

14. A computer program enabling carrying out of a method according to claims 1 to 10, and wherein said computer program is stored on a computer readable medium.

15. A system for analyzing a substantially tubular vascular body having a wall having a wall thickness, said system comprising
a unit for 3D reconstructing of at least one structural component of at least a portion of said vascular body from sets of image data,
a unit for generating quadrilateral and/or hexahedral Finite Element (FE) mesh of said at least one structural component,
a unit for performing a structural nonlinear FE analysis of said at least one structural component, and
a unit for therefrom providing information data regarding geometrical properties and internal mechanical loading of at least a sub-portion of said portion of said vascular body for said analyzing of said vascular body, wherein said generating said quadrilateral and/or hexahedral Finite Element (FE) meshes comprises using related luminal and outside meshes of said wall of said vascular body, wherein each node on a luminal inside border of said wall has a duplicate at an outside border thereof for volume meshing of said wall, **characterized by**
determining from said nodes of said meshes a distance between each of said duplicate nodes as said thickness of said wall at said duplicate nodes,
and wherein said meshes are used as a geometrical input for said FE mesh generation.

## Patentansprüche

1. Verfahren zur Analyse eines im Wesentlichen röhrenförmigen Gefäßkörpers, welcher eine Wand aufweist, die eine gewisse Wandstärke hat, wobei dieses Verfahren umfasst:
3D-Rekonstruktion (56) von mindestens einer strukturellen Komponente mindestens eines Abschnittes des Gefäßkörpers anhand von Bilddatensätzen,
Generierung (7) einer vierflächigen und/oder sechsflächigen Maschung aus Finiten Elementen (FE) dieser mindestens einen strukturellen Komponente,
Durchführung (11) einer nichtlinearen FE-Strukturanalyse dieser mindestens einen strukturellen Komponente, und
darauf basierende Bereitstellung (12) von Informationsdaten zu den geometrischen Eigenschaften und der internen mechanischen Belastung mindestens eines Unterabschnitts des besagten Abschnitts des röhrenförmigen Körpers zum Zwecke der Analyse dieses röhrenförmigen Körpers, wobei die Generierung der vierflächigen und/oder sechsflächig Maschung aus Finiten Elementen (FE) die Benutzung von dazugehörigen luminalen und äußeren Maschungen der Wand des Gefäßkörpers umfasst, wobei jeder auf einer luminalen Innengrenze dieser Wand befindliche Knotenpunkt ein Gegenstück an dessen Außengrenze hat, was der Volumenmaschung dieser Wand dient, welche **gekennzeichnet ist durch**:
Bestimmung eines Abstandes zwischen jedem der Gegenstück-Knotenpunkte zu den Knotenpunkten dieser Maschung, welcher als Stärke der Wand an der Position der Gegenstück-Knotenpunkte definiert wird,
wobei die Maschungen als geometrische Eingaben für die FE-Maschungsgenerierung verwendet werden.

2. Verfahren gemäß Anspruch 1, wobei die Bereitstellung von Informationsdaten zu den geometrischen Eigenschaften und der internen mechanischen Belastung mindestens eines Unterabschnittes des Abschnittes des Gefäßkörpers die automatische Analyse der Informationsdaten zu den geometrischen Eigenschaften und der internen mechanischen Belastung von mindestens einem Unterabschnitt des Abschnittes des Gefäßkörpers umfasst.

3. Verfahren gemäß Anspruch 1, ferner umfassend
Ladung (2) und Vorverarbeitung von Patientenbilddaten, Betrachtung von Bilddatensätzen,
Definition (3) einer Region von Interesse (ROI), Initialisierung (4) eines Rekonstruktionsprozesses,
wobei die Informationen des Bilddatensatzes manuell angereichert werden,
Segmentierung des Lumens des Gefäßkörpers von den übrigen im Bilddatensatz enthaltenen anatomischen Informationen,
Ausführung von deformierbaren 2D- und 3D-Modellen, z.B. Snake-and-Balloon-Modellen, zur Segmentierung des Bilddatensatzes,
Segmentierung der Außenseite des Gefäßkörpers von den übrigen im Bilddatensatz enthaltenen anatomischen Informationen,
Generierung von vierflächigen und sechsflächigen Maschungen von verschiedenen Gefäßgeweben zum Zwecke von FE-Analysen,
Analyse der geometrischen Eigenschaften und der internen mechanischen Belastung des Gefäßkörpers,
Ausgabe von Nachrichten, Veränderung von Software-Eigenschaften und Speicherung von Daten auf einem computerlesbaren Medium,
Herauf- und Herunterladen von Informationen auf eine beziehungsweise von einer Datenbank.

4. Verfahren gemäß einem beliebigen der vorangegangenen Ansprüche, die Integration aller Post-Patient-Scanning-Schritte in ein einziges System sowie die Bereitstellung von Informationen bezüglich einer patientenspezifischen Gefäßläsion, d.h. ihrer geometrischen Eigenschaften und ihrer mechanischen Belastungsbedingungen, umfassend.

5. Verfahren gemäß Anspruch 1, wobei das Verfahren den Einsatz von deformierbaren Modellen zur Rekonstruktion einer Geometrie des Gefäßkörpers und/oder eine vollständige 3D-Strukturanalyse des Gefäßkörpers umfasst, wobei verschiedene Materialtypen getrennt behandelt werden,
und/oder wobei das Verfahren die Bereitstellung eines Zugangs (13) zu zusammengefassten Daten von Gefäßkörpern umfasst.

6. Verfahren gemäß Anspruch 1, wobei die Rekonstruktion von mindestens einer Komponente eine 3D-Bild-Segmentierung auf der Grundlage von deformierbaren Modellen umfasst, und wobei das rekonstruierte und diskretisierte Komponentenobjekt direkt als geometrische Eingabe für die FE-Analyse verwendet werden kann.

7. Verfahren gemäß Anspruch 1, 5 oder 6, wobei dieses Verfahren die Lieferung von einer vierflächigen Maschung von mindestens einer Oberfläche des Gefäßkörpers umfasst.

8. Verfahren gemäß Anspruch 1, 5, 6 oder 7, wobei das Verfahren die Lieferung einer vornehmlich sechsflächigen Maschung eines Volumens des Gefäßkörpers umfasst, wobei gemischte finite Elemente für die FE-Analyse verwendet werden.

9. Verfahren gemäß Anspruch 8, wobei die gemischten finiten Elemente eine Q1P0-Formulierung umfassen.

10. Verfahren gemäß Anspruch 5, wobei verschiedene Arten von Gefäßgeweben getrennt behandelt werden.

11. Computerprogramm zur Verarbeitung durch eine Computervorrichtung zum Zwecke der Analyse eines im Wesentlichen röhrenförmigen Gefäßkörpers, welcher eine Wand aufweist, die eine gewisse Wandstärke hat, wobei das Computerprogramm umfasst:
erstes Codesegment zur 3D-Rekonstruktion von mindestens einer strukturellen Komponente von mindestens einem Abschnitt des Gefäßkörpers anhand von Bilddatensätzen,
zweites Codesegment zur Generierung einer vierflächigen und/oder sechsflächigen Maschung aus Finiten Elementen (FE) der mindestens einen strukturellen Komponente.
drittes Codesegment zur Durchführung einer nichtlinearen FE-Strukturanalyse der mindestens einen strukturellen Komponente, und
viertes Codesegment, auf dessen Basis Informationsdaten über geometrische Eigenschaften und die interne mechanische Belastung von mindestens einem Unterabschnitt des Abschnittes des Gefäßkörpers zum Zwecke der Analyse des Gefäßkörpers geliefert werden, wobei die Generierung der vierflächigen und/oder sechsflächigen Maschung aus Finiten Elementen (FE) die Verwendung von dazugehörigen luminalen und äußeren Maschungen der Wand des Gefäßkörpers umfasst, wobei jeder auf einer luminalen inneren Kante dieser Wand befindliche Knotenpunkt ein Gegenstück an deren äußeren Kante aufweist, was der Volumenmaschung dieser Wand dient, welche **gekennzeichnet ist durch**:
Bestimmung eines Abstandes zwischen jedem der Gegenstück-Knotenpunkte anhand der Knotenpunkte der Maschungen als Stärke der Wand an der Position der Gegenstück-Knotenpunkte,
wobei diese Maschungen als geometrische Eingabe für die FE-Maschungsgenerierung verwendet werden.

12. Computerprogramm gemäß Anspruch 11, ferner umfassend:
Codesegment zur Ladung und Vorverarbeitung von Patientenbilddaten,
weiteres Codesegment zur Betrachtung von Bilddatensätzen,
weiteres Codesegment zur manuellen Anreicherung der im Bilddatensatz enthalten Informationen,
weiteres Codesegment zur Definition einer Region von Interesse (ROI), und
weiteres Codesegment zur Initialisierung des Rekonstruktionsprozesses.

13. Computerprogramm gemäß Anspruch 12, ferner umfassend
weiteres Codesegment zur Segmentierung des Lumens des Gefäßkörpers von den übrigen im Bilddatensatz enthaltenen anatomischen Informationen,
weiteres Codesegment zur Ausführung von deformierbaren 2D- und 3D-Modellen, z.B. Snake-and-Balloon-Modellen, zum Zwecke der Segmentierung des Bilddatensatzes,
weiteres Codesegment zur Segmentierung der Außenseite des Gefäßkörpers von den übrigen im Bilddatensatz enthaltenen anatomischen Informationen,
weiteres Codesegment zur Generierung von Oberflächenmaschungen der verschiedenen Gefäßgewebe zum Zwecke von FE-Analysen,
weiteres Codesegment zur Generierung von Volumenmaschungen der verschiedenen Gefäßgewebe zum Zwecke von FE-Analysen,
weiteres Codesegment zur Analyse der geometrischen Eigenschaften und der internen mechanischen Belastung des Gefäßkörpers,
weiters Codesegment zur Ausgabe von Nachrichten, Veränderung von Software-Eigenschaften und Speicherung von Daten auf einem computerlesbaren Medium,
weiteres Codesegment zum Herauf- und Herunterladen von Informationen auf eine beziehungsweise von einer Datenbank.

14. Computerprogramm, welches die Ausführung des Verfahrens gemäß Ansprüchen 1 bis 10 ermöglicht, wobei das Computerprogramm auf einem computerlesbaren Medium gespeichert ist.

15. System zur Analyse eines im Wesentlichen röhrenförmigen Gefäßkörpers, welcher eine Wand aufweist, die eine gewisse Wandstärke hat, wobei das System umfasst:
Einheit zur 3D-Rekonstruktion von mindestens einer strukturellen Komponente von mindestens einem Abschnitt des Gefäßkörpers anhand eines Bilddatensatzes,
Einheit zur Generierung von vierflächigen und/oder sechsflächigen Maschungen aus Finiten Elementen (FE) der mindestens einen strukturellen Komponente,
Einheit zur Durchführung einer nichtlinearen FE-Strukturanalyse der mindestens einen strukturellen Komponente, und
Einheit, auf deren Basis Informationsdaten über geometrische Eigenschaften sowie die interne mechanische Belastung von mindestens einem Unterabschnitt des Abschnitts des Gefäßkörpers zum Zwecke der Analyse des Gefäßkörpers bereitgestellt werden, wobei die Generierung der vierflächigen und/oder sechsflächigen Maschungen aus Finiten Elementen (FE) die Verwendung von dazugehörigen luminalen und äußeren Maschungen der Wand des Gefäßkörpers umfasst, wobei jeder auf einer luminalen Innenkante dieser Wand befindliche Knotenpunkt ein Gegenstück an dessen äußeren Kante hat, was der Volumenmaschung der Wand dient, welche **gekennzeichnet ist durch**
Bestimmung eines Abstandes zwischen jedem der Gegenstück-Knotenpunkte anhand der Knotenpunkte der Maschungen als Stärke der Wand an der Position der Gegenstück-Knotenpunkte,
wobei die Maschungen als geometrischer Input für die FE-Maschungsgenerierung verwendet werden.

## Revendications

1. Procédé d'analyse d'un corps vasculaire globalement tubulaire ayant une paroi présentant une épaisseur de paroi, ledit procédé comprenant :
la reconstruction en 3D (5, 6) d'au moins un composant structurel d'au moins une partie dudit corps vasculaire à partir d'ensembles de données d'image,
la génération (7) d'un maillage d'éléments finis (EF) quadrilatéral et/ou hexaédrique dudit au moins un composant structurel,
la réalisation (11) d'une analyse d'EF non linéaire structurelle dudit au moins un composant structurel, et
la fourniture à partir des étapes précédentes (12) de données d'informations concernant les propriétés géométriques et la charge mécanique interne d'au moins une sous-partie de ladite partie dudit corps tubulaire pour ladite analyse dudit corps tubulaire, où ladite génération desdits maillages d'éléments finis (EF) quadrilatéraux et/ou hexaédriques comprend l'utilisation de maillages luminaux et extérieurs associés de ladite paroi dudit corps vasculaire, où chaque noeuds sur une bordure intérieure luminale de ladite paroi présente un double au niveau d'une bordure extérieure de celle-ci pour un maillage en volume de ladite paroi, **caractérisé par**
la détermination à partir desdits noeuds desdits maillages d'une distance entre chacun desdits noeuds dupliqués en tant que dite épaisseur de ladite paroi au niveau desdits noeuds dupliqués,
et où lesdits maillages sont utilisés comme une entrée géométrique pour ladite génération de maillages d'EF.

2. Procédé selon la revendication 1, dans lequel ladite fourniture de données d'informations concernant les propriétés géométriques et la charge mécanique interne d'au moins une sous- partie de ladite partie dudit corps vasculaire comprend l'analyse automatique desdites données d'informations concernant les propriétés géométriques et la charge mécanique interne d'au moins une sous-partie de ladite partie dudit corps vasculaire.

3. Procédé selon la revendication 1, comprenant en outre
la charge (2) et le pré-traitement des données d'image d'un patient,
l'observation des ensembles de données d'image,
la définition (3) d'une région d'intérêt (ROI),
l'initialisation (4) d'un processus de reconstruction,
l'enrichissement manuel d'informations de l'ensemble des données d'image,
la segmentation de la lumière du corps vasculaire à partir des informations anatomiques restantes de l'ensemble de données d'image,
l'exécution de modèles déformables en 2D et en 3D, par exemple, des modèles en forme de serpent et de ballon, pour segmenter l'ensemble de données d'image,
la segmentation de l'extérieur du corps vasculaire à partir des informations anatomiques restantes de l'ensemble de données d'image,
la génération de maillages quadrilatéraux et hexaédriques de différents tissus vasculaires pour des analyses d'EF,
l'analyse des propriétés géométriques et de la charge mécanique interne du corps vasculaire,
la génération de messages d'invite, la modification de propriétés associées à un logiciel et la sauvegarde de données sur un support pouvant être lu par un ordinateur,
le téléchargement et le transfert d'informations à destination et en provenance d'une base de données.

4. Procédé selon l'une quelconque des revendications précédentes, comprenant l'intégration de toutes les étapes suite au balayage d'un patient en un seul système et la fourniture d'informations concernant une lésion vasculaire propre à un patient, c'est-à-dire ses propriétés géométriques et ses conditions de charge mécanique.

5. Procédé selon la revendication 1, dans lequel ledit procédé comprend l'utilisation de modèles déformables pour une reconstruction d'une géométrie dudit corps vasculaire, et/ou comprenant une analyse structurelle totalement en 3D dudit corps vasculaire, où différents types de matières sont traités séparément, et/ou où ledit procédé comprend la fourniture d'un accès (13) à des données regroupées de corps vasculaires.

6. Procédé selon la revendication 1, dans lequel ladite reconstruction d'au moins un composant comprend une segmentation d'image en 3D sur la base de modèles déformables et dans lequel ledit objet de composant reconstruit et discrétisé peut directement être utilisé comme une entrée géométrique pour ladite analyse d'EF.

7. Procédé selon la revendication 1, 5 ou 6, où ledit procédé comprend la fourniture d'un maillage quadrilatéral d'au moins une surface dudit corps vasculaire.

8. Procédé selon la revendication 1, 5, 6 ou 7, où ledit procédé comprend la fourniture d'un maillage dominé hexaédral d'un volume du corps vasculaire, appliquant les éléments finis mélangés pour ladite analyse d'EF.

9. Procédé selon la revendication 8, dans lequel lesdits éléments finis mélangés comprennent une formulation Q1PO.

10. Procédé selon la revendication 5, dans lequel différents types de tissus de vaisseaux sont traités séparément.

11. Programme informatique destiné à être traité par un dispositif informatique, pour une analyse d'un corps vasculaire globalement tubulaire ayant une paroi présentant une épaisseur de paroi, ledit programme informatique comprenant
un premier segment de code destiné à la reconstruction en 3D d'au moins un composant structurel d'au moins une partie dudit corps vasculaire à partir d'ensembles de données d'image,
un deuxième segment de code destiné à la génération d'un maillage d'éléments finis (EF) quadrilatéral et/ou hexaédrique dudit au moins un composant structurel,
un troisième segment de code destiné à la réalisation d'une analyse d'EF non linéaire structurelle dudit au moins un composant structurel, et
un quatrième segment de code destiné à la fourniture à partir des étapes précédentes de données d'informations concernant les propriétés géométriques et la charge mécanique interne d'au moins une sous-partie de ladite partie dudit corps vasculaire pour ladite analyse dudit corps vasculaire, où ladite génération desdits maillages d'éléments finis (EF) quadrilatéraux et/ou hexaédriques comprend l'utilisation de maillages luminaux et extérieurs associés de ladite paroi dudit corps vasculaire, où chaque noeud sur une bordure intérieure luminale de ladite paroi présente un double au niveau d'une bordure extérieure de celle-ci pour un maillage en volume de ladite paroi, **caractérisé par**
la détermination à partir desdits noeuds desdits maillages d'une distance entre chacun desdits noeuds dupliqués en tant que dite épaisseur de ladite paroi au niveau desdits noeuds dupliqués,
et où lesdits maillages sont utilisés comme une entrée géométrique pour ladite génération de maillages d'EF.

12. Programme informatique selon la revendication 11, comprenant en outre
un segment de code destiné à la charge et au pré-traitement des données d'image d'un patient,
un autre segment de code destiné à l'observation des ensembles de données d'image,
un autre segment de code destiné à l'enrichissement manuel d'informations de l'ensemble de données d'image,
un autre segment de code destiné à la définition d'une région d'intérêt (ROI) un autre segment de code destiné à l'initialisation du processus de reconstruction.

13. Programme informatique selon la revendication 12, comprenant en outre
un autre segment de code destiné à la segmentation de la lumière du corps vasculaire à partir des informations anatomiques restantes de l'ensemble de données d'image,
un autre segment de code destiné à l'exécution de modèles déformables en 2D et en 3D, par exemple, des modèles en forme de serpent et de ballon, pour segmenter l'ensemble de données d'image,
un autre segment de code destiné à la segmentation de l'extérieur du corps vasculaire à partir des informations anatomiques restantes de l'ensemble de données d'image,
un autre segment de code destiné à la génération de maillages en surface des différents tissus vasculaires pour des analyses d'EF,
un autre segment de code destiné à la génération de maillages en volume des différents tissus vasculaires pour des analyses d'EF,
un autre segment de code destiné à l'analyse des propriétés géométriques et de la charge mécanique interne du corps vasculaire,
un autre segment de code destiné à la génération de messages d'invite, à la modification de propriétés associées à un logiciel et à la sauvegarde de données sur un support pouvant être lu par un ordinateur,
et un autre segment de code destiné au téléchargement et au transfert d'informations à destination et en provenance d'une base de données.

14. Programme informatique permettant la réalisation d'un procédé selon les revendications 1 à 10, et où ledit programme informatique est mémorisé sur un support pouvant être lu par un ordinateur.

15. Système destiné à analyser un corps vasculaire globalement tubulaire ayant une paroi présentant une épaisseur de paroi, ledit système comprenant :
une unité destinée à la reconstruction en 3D d'au moins un composant structurel d'au moins une partie dudit corps vasculaire à partir d'ensembles de données d'image,
une unité destinée à la génération d'un maillage d'éléments finis (EF) quadrilatéral et/ou hexaédrique dudit au moins un composant structurel,
une unité destinée à la réalisation d'une analyse d'EF non linéaire structurelle dudit au moins un composant structurel et,
une unité destinée à la fourniture à partir des étapes précédentes de données d'informations concernant les propriétés géométriques et la charge mécanique interne de ladite au moins une sous-partie de ladite partie dudit corps vasculaire pour ladite analyse dudit corps vasculaire, où ladite génération desdits maillages d'éléments finis (EF) quadrilatéraux et/ou hexaédriques comprend l'utilisation de maillages luminaux et extérieurs associés de ladite paroi dudit corps vasculaire, où chaque noeud sur une bordure intérieure luminale de ladite paroi présente un double au niveau d'une bordure extérieure de celle-ci pour un maillage en volume de ladite paroi, **caractérisé par**
la détermination à partir desdits noeuds desdits maillages d'une distance entre chacun desdits noeuds dupliqués en tant que dite épaisseur de ladite paroi au niveau desdits noeuds dupliqués,
et où lesdits maillages sont utilisés comme une entrée géométrique pour ladite génération de maillages d'EF.
